# EUROPÄISCHE PATENTANMELDUNG

(11) **EP 1 185 081 A1**
(43) Veröffentlichungstag der Anmeldung: **06.03.2002**
(21) Anmeldenummer: 00118169.2
(22) Anmeldetag: 30.08.2000
(51) Int. Cl.: H04N 1/60

(54) **Verfahren und Vorrichtung zur Herstellung eines digitalen Farbbilds**

(71) Anmelder: Gretag-MacBeth AG, 8105 Regensdorf (CH)
(72) Erfinder: Benz, Christian, 5424 Unterehrendingen (CH); Mühlemann, Arthur, 8623 Wetzikon (CH); Braun, Thorsten, 48432 Rheine (DE)
(74) Vertreter: Schwabe - Sandmair - Marx

(57) **Zusammenfassung**

Zur Herstellung eines digitalen Farbbilds von einer fotografischen Vorlage (V) wird diese mittels eines farbtauglichen Abtastgeräts (S) fotoelektrisch abgetastet und aus den dabei gewonnenen Abtastwerten ein rohes digitales Farbbild (B_{d}') gebildet. Das endgültige digitale Farbbild (B_{d}) wird durch eine Farbtransformation (T) des rohen Farbbilds (B_{d}') nach den Prinzipien des Color Management gebildet, wobei ein gerätespezifisches Profil (P) verwendet wird, das die typspezifischen farbmetrischen Eigenschaften der Vorlage (V) in Kombination mit der Übertragungsfunktion des eingesetzten Abtastgeräts (S) in Bezug auf ein analog erstelltes Referenz-Farbbild (B_{R}) beschreibt.

Die in der Praxis vorkommenden unterschiedlichen Vorlagentypen werden nach farbmetrischen Ähnlichkeitskriterien zu Kategorien zugeordnet, und in jeder Kategorie wird ein Hauptvorlagentyp festgelegt. Profile (P) werden jeweils nur für die Hauptvorlagentypen erstellt. Je nach Qualitätsanforderungen können verschiedene Kategorien-Zuordnungen und Festlegungen von Hauptvorlagentypen erfolgen. Alle Vorlagentypen einer Kategorie werden unter Verwendung desselben, zum Hauptvorlagentyp der Kategorie gehörenden Profils verarbeitet.

Durch Einbezug des Color Managements in den Herstellungsprozess des digitalen Farbbilds wird unabhängig vom aktuellen Vorlagentyp und vom aktuellen Scanner-Typ eine farbgetreue digitale Bildwiedergabe erreicht. Durch die Verwendung von Vorlagentyp-Kategorien wird der Aufwand in praktikablen Grenzen gehalten.

## Beschreibung

Die Erfindung betrifft ein Verfahren und eine Vorrichtung zur Herstellung eines digitalen Farbbilds von einer insbesondere fotografischen Vorlage gemäss dem Oberbegriff des unabhängigen Anspruchs 1 bzw. des unabhängigen Anspruchs 10.

In der bildverarbeitenden Industrie verstärkt sich der Trend, von Vorlagen beliebiger Art erzeugte Farbbilder nicht nur in der klassischen Form als körperliche Farbbilder (sog. "analoge" Farbbilder) sondern zusätzlich oder alternativ auch digital in Form von Bilddateien (z.B. im JPEG-Format) zur Verfügung zu stellen. Zur Erstellung der letzteren wird die Vorlage mittels eines hochauflösenden farbtauglichen fotoelektrischen Abtastgeräts (Scanners) digitalisiert und aus den dabei gewonnenen Abtastwerten, ggf. nach Bildumkehr (negativ zu positiv), eine digitale Bilddatei gebildet und auf ein passendes Datenträgermedium, z.B. eine Compact Disk, aufgezeichnet. Die Bilddatei kann dann mittels einer handelsüblichen Bildbetrachtungssoftware auf einem Bildschirm dargestellt und ggf. auch auf einem Farbdrucker ausgedruckt werden.

Erfahrungsgemäss unterscheiden sich die Farbeindrücke von ein und derselben Vorlage hergestellten analogen und digitalen Farbbildern auch bei Verwendung eines optimal kalibrierten Betrachtungsbildschirms in aller Regel erheblich. Bedingt ist dies durch die Vielfalt der in der Praxis zu verarbeitenden unterschiedlichen Vorlagentypen (unterschiedliche Negativ- oder Positiv-Filmfabrikate und -typen) einerseits und durch die unterschiedlichen Farbgänge (Übertragungsfunktionen) der an der Bildherstellung beteiligten Gerätschaften anderseits. So ist es u.a. in der Praxis nicht machbar, einen Scanner so einzustellen, dass er unabhängig vom Vorlagentyp immer dasselbe Ergebnis liefert, und umgekehrt erzeugen unterschiedliche Scanner-Fabrikate auch bei optimaler Kalibrierung für ein und denselben Vorlagentyp unterschiedliche Farbbilddateien.

Durch die vorliegende Erfindung soll nun ein Weg aufgezeigt werden, wie bei der Herstellung von digitalen Farbbildern weitestgehend unabhängig von Vorlagentyp und eingesetztem Abtastgerät eine qualitativ hochstehende, realitätsnahe und gleichbleibende Farbwiedergabe erreicht werden kann. Dabei soll der für digital erzeugte Farbbilder erreichte Qualitätsstandard dem für analog, d.h. klassisch hergestellte körperliche Farbbilder erreichten bzw. gewählten Qualitätsstandard des verarbeitenden Fotolabors (Fotofinishing-Betrieb oder Fach-Labor oder Pre-Press-Studio oder dgl.) gleichkommen. Ein weiteres Ziel der vorliegenden Erfindung ist es, die Voraussetzungen dafür zu schaffen, dass die Qualität der Farbwiedergabe bei digitalen Produktionsprozess weitestgehend automatisch, d.h. ohne den Produktionsfluss störende manuelle Korrektureingriffe, konstant gehalten werden kann.

Die Lösung dieser der Erfindung zugrundeliegenden Aufgabe ergibt sich aus den im kennzeichnenden Teil des unabhängigen Anspruchs 1 bzw. des unabhängigen Anspruchs 10 beschriebenen Merkmalen. Besonders vorteilhafte Ausgestaltungen und Weiterbildungen sind Gegenstand der jeweils abhängigen Ansprüche. Die Erfindung betrifft auch einen für die Durchführung des Verfahrens besonders vorteilhaften Farbmessstreifen, der durch die Merkmale des unabhängigen Anspruchs 17 gekennzeichnet ist.

Gemäss dem grundlegendsten Gedanken der Erfindung wird also das vom Scanner erzeugte rohe_digitale Farbbild vor seiner Abspeicherung bzw. Aufzeichnung nach den Methoden des Color Managements einer Farbtransformation unterworfen, welche die typspezifischen farbmetrischen Eigenschaften der fotografischen Vorlage sowie die Übertragungsfunktion des eingesetzten Scanners berücksichtigt. Bei dieser Farbtransformation wird nach an sich bekannten Methoden der Farbraum der aktuellen Vorlagentyp-Scanner-Kombination in einen Referenz-Farbraum abgebildet, welcher dem Qualitätsstandard des verarbeitenden Fotolabors entspricht. Auf diese Weise wird unabhängig vom aktuellen Vorlagentyp und vom aktuellen Scanner-Typ eine farbgetreue digitale Bildwiedergabe erreicht, welche dem Qualitätsstandard des Fotolabors entspricht. Gleichzeitig werden dadurch die Voraussetzungen für eine automatische Konstanthaltung der Farbwiedergabequalität unter allen Prozess-Konstellationen geschaffen.

Im folgenden wird die Erfindung anhand der Zeichnung näher erläutert. Es zeigen:
- Fig.1: ein Schema zur Erläuterung der der Erfindung zugrundeliegenden Problematik,
- Fig. 2: ein Prinzip-Schema eines Ausführungsbeispiels des erfindungsgemässen Verfahrens,
- Fig. 3: den Aufbau eines typischen für das erfindungsgemässe Verfahren einsetzbaren Farbmessstreifens,
- Fig. 4: ein Prinzip-Schema der Erstellung eines Profils und
- Fig. 5: ein Prinzip-Schema eines Ausführungsbeispiels der erfindungsgemässen Vorrichtung.

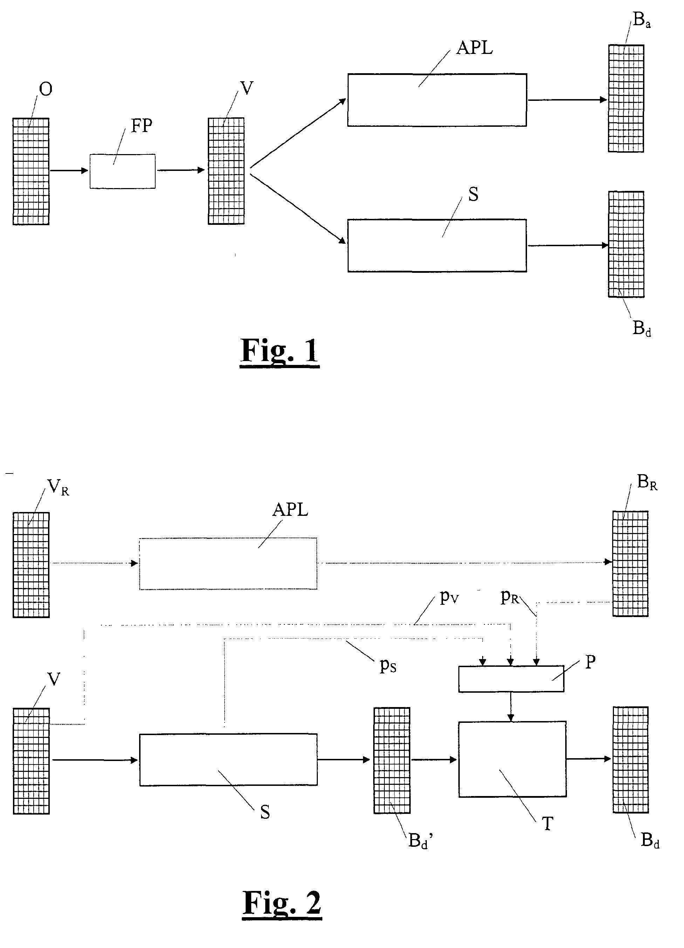

Gemäss Fig. 1 wird ein Original-Bild O auf ein fotografisches Farbmaterial aufbelichtet und letzteres in der üblichen Weise in einem Film-Prozesser FP nasschemisch behandelt. Das Ergebnis ist eine ein dem Originalbild entsprechendes Bildmotiv enthaltende farbige Vorlage V, die den Ausgangspunkt für alles Folgende bildet. Bei der Vorlage V handelt es sich in der Regel um fotografisches Negativ-Filmmaterial, es kann aber auch ein Positiv-Material zum Einsatz kommen. Im folgenden werden die verschiedenen in der täglichen Praxis eines Fotolabors vorkommenden Vorlagenmaterialien (verschiedene Negativ- bzw. Positiv-Film-Fabrikate und Film-Typen) allgemein als Vorlagentypen bezeichnet.

Von der Vorlage V werde nun einmal auf klassische, analoge Weise ein körperliches, analoges Farbbild (Papierbild) Bₐ und einmal auf digitale Weise ein digitales Farbbild B_{d} erstellt. Für die Herstellung des analogen Farbbilds Bₐ wird eine übliche analoge Produktionslinie APL eingesetzt, die z.B. einen klassischen fotografischen Printer in Kombination mit einem passenden Papierprozessor umfasst und entsprechend kalibriert ist. Für die Herstellung des digitalen Farbbilds B_{d} wird ein handelsüblicher farbtauglicher Hochleistungsscanner S verwendet, der die Vorlage durch hochauflösende fotoelektrische Abtastung digitalisiert, ggf. eine Bildumkehr (negativ zu positiv) durchführt und das digitale Farbbild B_{d} in Form einer digitalen Bilddatei z.B. im bekannten JPEG-Format zur Verfügung stellt. Im Falle einer positiven Vorlage entfällt natürlich die Bildumkehr.

Wie schon eingangs erläutert, werden sich die Farbeindrücke des analogen Farbbilds Bₐ und des digitalen Farbbilds B_{d} in aller Regel erheblich unterscheiden, je nach dem, wie die analoge Produktionslinie eingestellt ist, welches Scanner-Fabrikat gerade eingesetzt wird und welcher Vorlagentyp verwendet wurde. Jeder Vorlagentyp weist ein spezifisches spektrales Verhalten auf, welches in Kombination mit der Übertragungsfunktion des eingesetzten Scanners zu ganz unterschiedlichen digitalen Farbbildern B_{d} führen kann, wobei die Qualität der Farbwiedergabe in der Regel erheblich schlechter ist als bei den klassischen analogen Farbbildern Bₐ.

Um nun eine von Vorlagentyp und Scanner-Fabrikat/typ weitestgehend unabhängige Farbqualität des digitalen Farbbilds zu erreichen, werden, wie dies in Figur 2 dargestellt ist, gemäss dem grundlegenden Gedanken der Erfindung die Prinzipien des Color Management auf den Herstellungsvorgang des digitalen Farbbilds angewandt bzw., in anderen Worten, der Herstellungsvorgang des digitalen Farbbilds in ein Color Management System einbezogen. Dazu werden die vom Abtastgerät bzw. Scanner S durch Digitalisierung der Vorlage V erzeugten rohen Bilddaten B_{d}' einer Farbtransformation T unterworfen, bei welcher der von der Kombination aus aktuellem Vorlagentyp und aktuell eingesetztem Scanner darstellbare Farbraum auf den Farbraum eines körperlichen Referenz-Farbbilds B_{R} abgebildet wird. Das Ergebnis dieser Farbtränsformation T sind die Bilddaten des zu erzeugenden digitalen Farbbilds B_{d}, welche dann zur üblichen Weiterbehandlung (z.B. Aufzeichnung auf ein Datenträgermedium und ggf. vorgängige Bilddrehung oder sonstige Bildbearbeitung) abgespeichert werden.

Als Referenz-Farbbild B_{R} wird ein körperliches, analoges Farbbild verwendet, das von einer Vorlage eines ausgewählten, im folgenden als Referenzvorlagentyp V_{R} ("Super-Master") bezeichneten Typs mittels einer im verarbeitenden Fotolabor standardmässig eingesetzten und stabil laufenden analogen Produktionslinie APL hergestellt wurde und eine Anzahl von Farbmessfeldern enthält. Vorzugsweise wird als Referenzvorlagentyp V_{R} bzw. Super-Master ein Vorlagentyp ausgewählt, der im betreffenden Fotolabor am häufigsten verarbeitet wird. Auf diese Weise verkörpert das Referenz-Farbbild B_{R} den (internen, relativen) Qualitätsstandard des betreffenden Fotolabors (für analoge Farbbilder). Selbstverständlich kann aber auch ein anderer Vorlagentyp für diese Zwecke herangezogen werden.

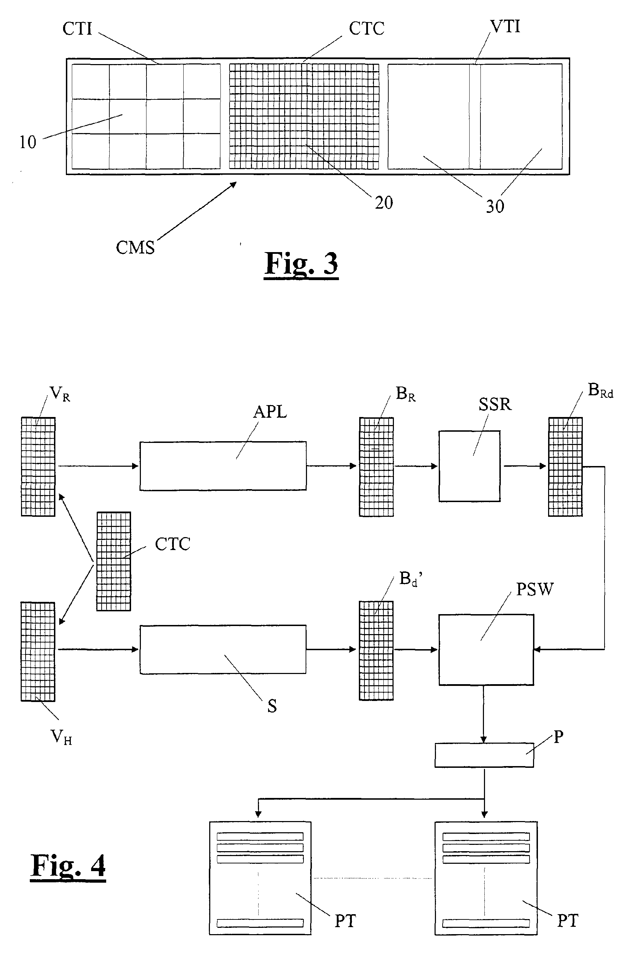

Die Farbtransformation T wird in an sich bekannter Weise durch ein standardisiertes Software-Modul eines Color Management Systems durchgeführt. Die erforderliche Software ist allgemein verfügbar und vielfach sogar Bestandteil von Betriebssystemen für Rechner (z.B. das zum Betriebssystem Microsoft Windows 2000 gehörende Color Management Modul "ICM"). Die Transformation T benötigt als Parameter ein sogenanntes Profil P, welches Informationen über die typspezifischen farbmetrischen Eigenschaften der aktuellen fotografischen Vorlage sowie die Übertragungsfunktion des aktuell eingesetzten Abtastgeräts (Scanners) enthält. Das Profil P beschreibt in an sich bekannter, genormter Weise den von der Kombination aus aktuellem Vorlagentyp V und aktuell eingesetztem Scanner S umfassten, für diese Kombination spezifischen Farbraum, indem es den Farbwerten dieses spezifischen Farbraums absolute Farbwerte des Referenz-Farbbilds B_{R} zuordnet. Absolute Farbwerte können z.B. sRGB oder CIELab L*a*b* gemäss den Spezifikation der CIE (Commission Internationale de l'Eclairage) sein. Während die Umrechnungsalgorithmen der Transformation T für alle möglichen Kombinationen von Vorlagentypen und Abtastgeräten stets gleich sind, stecken die für jede Kombination von Vorlagentyp und Scanner-Typ spezifischen Transformationsparameter in diesem Profil P. Die Verknüpfung des Profils P mit der aktuellen Vorlage V, dem aktuellen Scanner S und dem Referenz-Farbbild B_{R} ist in Figur 2 durch die gestrichelten Linien pᵥ, pₛ und p_{R} symbolisch dargestellt. Auf die Erstellung der Profile P wird weiter unten noch anhand der Figur 4 eingegangen.

Color Management und Color Management Systeme sind an sich bekannt und werden in (anderen) digitalen Farbreproduktionssprozessen allgemein eingesetzt. Eine umfassende und übersichtliche Darstellung der Hintergründe, Technologien und Anwendungen von Color Management Systemen findet sich in der von der Firma Logo GmbH, einer Gesellschaft der GretagMacbeth Gruppe, im August 1999 herausgegebenen Publikation "Postscriptum on Color Management, Philosophy and Technology of Color Management" der Autoren Stefan Brües, Liane May und Dietmar Fuchs. Eine weitere Abhandlung über Color Management findet sich beispielsweise im Kapitel 17 "Device-Independent Color Imaging" des Buchs "Color Appearance Models" von Mark D. Fairchild, erste Auflage, herausgegeben 1997 von Addison Wesley. Eine nähere Erläuterung der beim erfindungsgemässen Verfahren eingesetzten Farbtransformation T ist deshalb für den Fachmann entbehrlich.

Durch die erfindungsgemäss eingesetzte Farbtransformation wird das digitale Farbbild B_{d} unabhängig vom verwendeten Vorlagentyp und vom eingesetzten Scanner immer an den Farbraum des Referenz-Farbbilds B_{R} angeglichen. Der Farbeindruck der so erzeugten digitalen Farbbilder stimmt daher weitestgehend mit dem Qualitätsstandard von im betreffenden Fotolabor analog erzeugten Farbbildern überein, wobei die Farbqualität der digitalen Farbbilder aufgrund der spezifischen Auswahl des Referenz-Farbbilds immer dem Fotolabor-eigenen Qualitätsstandard entspricht.

Für optimale Farbqualität der digitalen Farbbilder müsste streng genommen für jede in der Praxis vorkommende Kombination von Vorlagentyp und Scanner-Fabrikat (Typ) ein eigenes Profil P erstellt und für die Farbtransformation T verwendet werden. Bei der grossen Vielfalt der im Fotolabor-Alltag anfallenden unterschiedlichen Vorlagentypen (beispielsweise 50 und mehr) und der doch zumindest in grösseren Fotolabors nicht zu vernachlässigenden Anzahl gleichzeitig eingesetzter unterschiedlicher Scanner-Typen (beispielsweise 3 oder mehr) würde dies rasch zu einer extrem grossen Anzahl von erforderlichen unterschiedlichen Profilen führen und den Aufwand unangemessen in die Höhe treiben.

Um den Aufwand in für die Praxis tragbaren Grenzen zu halten, wird nun gemäss einem weiteren wichtigen Aspekt der Erfindung nur eine relativ kleine Anzahl von unterschiedlichen Profilen für die Farbtransformation verwendet. Damit dies ohne substantielle, d.h. für die praktischen Ansprüche unakzeptable Qualitätseinbusse möglich ist, werden die in der Praxis vorkommenden Vorlagentypen nach noch zu erläuternden Ähnlichkeitskriterien einer verhältnismässig kleinen Anzahl von Vorlagentypen-Kategorien zugeordnet und für jede Kategorie ein Hauptvorlagentyp ("Master") festgelegt. Ein Hauptvorlagentyp ist dabei einer der der betreffenden Kategorie angehörigen Vorlagentypen, in der Regel der (im betreffenden Fotolabor) innerhalb der Kategorie am häufigsten anfallende Vorlagentyp. Wie eine solche Einteilung in Vorlagentyp-Kategorien in der Praxis aussehen kann, ist in der nachstehenden Tabelle 1 beispielsweise erläutert:

**Tabelle 1**

| Kategorie | Vorlagentyp | Hauptvorlagentyp | Referenzvorlagentyp |
|---|---|---|---|
| 1 | Optima 17-2 | | Kodak 78-2 |
| | Agfa 113-1 | Agfa 113-1 | |
| | Agfa 113-4 | | |
| 2 | Fuji 35-2 | | |
| | Fuji 35-3 | Fuji 35-3 | |
| 3 | Fuji 35-5 | Fuji 35-5 | |
| 4 | Kodak 78-3 | | |
| | Kodak 78-2 | Kodak 78-2 | |
| | Kodak 78-1 | | |

Wie man erkennt, sind (hier im Beispiel) neun unterschiedliche Vorlagentypen vier unterschiedlichen Kategorien zugeordnet, welche drei, zwei, einen und drei Vorlagentypen umfassen. Der in der Praxis am häufigsten anfallende Vorlagentyp jeder Kategorie ist als jeweiliger Hauptvorlagentyp festgelegt. Der im betreffenden Fotolabor insgesamt am häufigsten anfallende Vorlagentyp ist schliesslich als der schon weiter oben erwähnte Referenzvorlagentyp ("Super-Master") ausgewählt. Die durch das Fotolabor individuell getroffene Zuordnung der einzelnen Vorlagentypen zu den unterschiedlichen Vorlagen-Kategorien wird in einer Kategorien-Tabelle KT festgehalten und abgespeichert.

Für alle Kombinationen der im verarbeitenden Fotolabor eingesetzten Scanner mit diesen Hauptvorlagentypen wird ein spezifisches Profil erstellt, wobei die zu je einem Scanner-Typ gehörenden Profile in einer dem betreffenden Scanner zugeordneten Profil-Tabelle PT abgelegt werden. Bei angenommenen drei unterschiedlichen Scannern würden sich also mit dem vorstehenden Beispiel von vier Kategorien 3 Profil-Tabellen mit jeweils 4 unterschiedlichen Profilen ergeben.

Bei der Herstellung eines digitalen Farbbilds werden dann gemäss der Erfindung alle Vorlagentypen innerhalb einer Kategorie als gleichwertig angesehen und die Farbtransformation für jeden Vorlagentyp der Kategorie mit demselben Profil durchgeführt, nämlich demjenigen Profil, das zum eingesetzten Scanner und zum Hauptvorlagentyp der betreffenden Kategorie gehört. Auf diese Weise wird der Aufwand beträchtlich reduziert.

Die Zuordnung der Vorlagentypen zu Vorlagen-Kategorien hängt in der Praxis einerseits von der grundsätzlichen Vorlagenart (Negativ-Film, Positiv-Film ...) und anderseits von den Qualitätsanforderungen des Produktionsprozesses ab. So ist im allgemeinen für die geringeren Qualitätsanforderungen der Amateurfotografie eine gröbere Kategorisierung als für die höheren Qualitätsanforderungen der Fachfotografie möglich. In der Praxis werden daher für diese verschiedenen Konstellationen unterschiedliche Vorlagen-Kategorie-Tabellen KT gebildet und abgespeichert. Dabei ist es vorteilhaft, wenn die in einem Fotolabor bei der Herstellung von digitalen Farbbildern möglichen Produktionskonstellationen hierarchisch gegliedert werden, wie dies in der nachstehenden Tabelle 2 schematisch dargestellt ist:

**Tabelle 2**

| Negativ-Film | | | Diapositiv-Film | | | Sonstige Vorlagen | | |
|---|---|---|---|---|---|---|---|---|
| Amateur | Fach | sonstige | Amateur | Fach | sonstige | Amateur | Fach | sonstige |
| KT₁₁ | KT12 | KT₁₃ | KT₂₁ | KT₂₂ | KT₂₃ | KT₃₁ | KT₃₂ | KT33 |

In einer obersten Hierarchie-Ebene wird dabei zwischen den verschiedenen grundsätzlichen Ausgangsmaterialien (Negativ-Film, Positiv-Film etc.) unterschieden, von denen digitale Farbbilder hergestellt werden sollen. In der darunterliegenden Hierarchie-Ebene wird nach Qualitätsanforderungen unterschieden, z.B. geringere Anforderungen für die Amateur-Fotografie und höhere Anforderungen für die Fach-Fotografie. Die nächste Hierarchie-Ebene enthält verschiedene Kategorie-Tabellen KTₘₙ für jede mögliche Kombination der Auswahlmöglichkeiten der beiden darüberliegenden Hierarchie-Ebenen. So sind also z.B. in der vorstehenden Tabelle 2 für Negativ-Vorlagen unterschiedliche Kategorie-Tabellen KT₁₁ - KT₁₃ für die Amateur-Fotografie, die Fach-Fotografie und für eventuelle sonstige Anforderungsgegebenheiten vorgesehen. Selbstverständlich können aber unter Umständen für einzelne Prozess-Konstellationen auch dieselben Kategorie-Tabellen verwendet werden.

Die Kategorien-Tabellen legen die für die jeweilige Prozess-Konstellation in Abhängigkeit des aktuellen Vorlagentyps wählbaren Profile für jeden eingesetzten Scanner S fest. In der nachstehenden Tabelle 3 ist dies verdeutlicht:

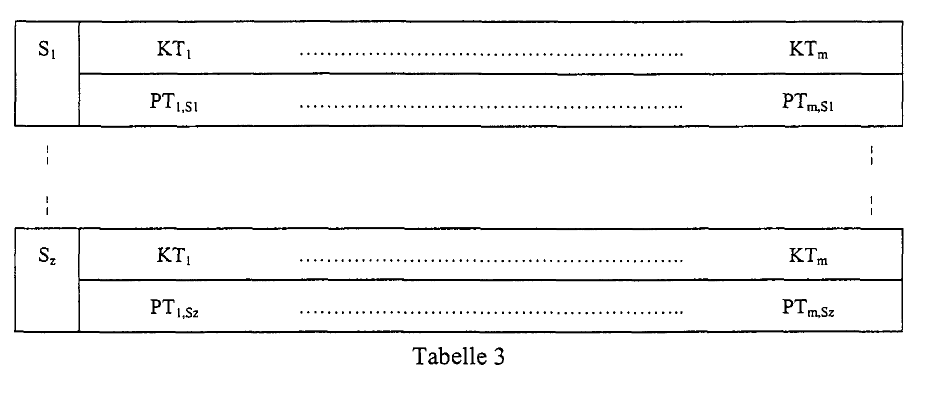

Zu jeder Kategorien-Tabelle KT₁ - KTₘ gehört für jeden Scanner S₁ - S_{z} eine spezifische Profil-Tabelle PT_{1,S1} - PT_{m,S1} u.s.w. bis PT_{1,Sz} - PT_{m,Sz}. Anhand der zur jeweiligen Prozess-Konstellation (Negativ kopieren, Diapositiv kopieren ....; Amateurfotografie, Fachfotografie ...) gehörenden aktuellen Kategorien-Tabelle KT wird dann das dem aktuellen Vorlagentyp entsprechende Profil P aus der zum aktuellen Scanner S gehörenden Profil-Tabelle PT ausgewählt. In der Praxis sind die abgespeicherten Profile P und Kategorien-Tabellen KT natürlich vorzugsweise datenbankmässig organisiert.

Die Zuordnung der einzelnen Vorlagentypen zu Kategorien erfolgt, wie schon gesagt, nach Ähnlichkeitskriterien in der Regel durch das verarbeitende Fotolabor, wobei im allgemeinen Vorlagentypen mit ähnlichen spektralen Eigenschaften derselben Kategorie zugeordnet werden. Eine praktische Möglichkeit der objektivierten Zuordnung besteht z.B. unter Zuhilfenahme von geeignete Testbilder mit Farbmessfeldern enthaltenden Testvorlagen aller zu kategorisierenden Vorlagentypen. Dabei werden mittels eines geeigneten, vorzugsweise automatischen Farbmessgeräts die Farbwerte der einzelnen Farbmessfelder von der Testvorlage jedes Vorlagentyps bestimmt und mit den entsprechenden Farbwerten der Farbmessfelder der anderen Vorlagentypen verglichen. Zu gleichen oder innerhalb vorbestimmter Grenzen ähnlichen Farbwerten (Kriterium Summe oder Mittelwert der Farbabweichungen) führende Vorlagentypen wer-den dann jeweils ein und derselben Kategorie zugeordnet, grössere Abweichungen führen jeweils zu einer neuen Kategorie. Die ganze Prozedur erfolgt vorzugsweise Software-unterstützt.

Die Erstellung der Profile P für die einzelnen Scanner-Hauptvorlagentyp-Kombinationen erfolgt in an sich bekannter Weise mit Hilfe von sog. Farbmesskarten und unter Einsatz eines Farbmessgeräts sowie von handelsüblicher Profilerstellungssoftware. Letztere wird z.B. unter der Bezeichnung "ProfileMaker" von der Firma Gretag-Macbeth AG, Regensdorf, Schweiz vertrieben. Da für Profilerstellungszwecke verwendete Farbmesskarten eine grosse Anzahl (mehrere Hundert) von Farbmessfeldern aufweisen, wird zu ihrer farbmetrischen Ausmessung vorzugsweise ein scannendes Farbmessgerät benutzt, das die gesamte Farbmesskarte automatisch ausmessen kann. Als Beispiel für ein solches scannendes Farbmessgerät sei das Spektralfotometer "Spectrolino" der Firma Gretag-Macbeth in Kombination mit dem X/Y-Verschiebetisch "SpectroScan" derselben Firma erwähnt. Alternativ kann auch ein handelsübliches, mit einem Farbmesskopf oder Spektralmesskopf ausgestattetes, im wesentlichen wie ein Einzugscanner arbeitendes sog. Streifenlesegerät eingesetzt werden.

In Figur 3 ist der Aufbau eines für die Zwecke der vorliegenden Erfindung besonders geeigneten kombinierten Farbmessstreifens CMS dargestellt, der im wesentlichen aus drei Bereichen besteht. Ein Bereich CTI bildet das schon erwähnte Farbtestbild für die Kategorisierung der Vorlagentypen, der zweite Bereich CTC bildet eine Farbtestkarte für Profilierungszwecke und der dritte Bereich VTI enthält z.B. zwei Bilder 30 für die visuelle Beurteilung der Farbbilder. Der Farbtestbild-Bereich CTI umfasst z.B. zwölf Farbmessfelder 10 in Gestalt von sechs Volltonfeldern der additiven und subtraktiven Grundfarben, einem Weissfeld, einem Schwarzfeld und vier Graufeldern unterschiedlicher Dichten. Der Farbtestkarten-Bereich CTC umfasst in an sich bekannter Weise einige Hundert Farbmessfelder 20 unterschiedlicher Farbtöne und Dichten. Es versteht sich, dass für die Kategorisierung der Vorlagentypen auch die Messfelder 20 des Farbtestkarten-Bereichs CTC herangezogen werden könnten; der Mess- und Auswertungsaufwand würde dadurch aber wesentlich steigen. Vorwegnehmend sei ferner erwähnt, dass der Testbild-Bereich CTI des Farbmessstreifens CMS gemäss einem weiteren Aspekt der Erfindung auch noch für Qualitätskontrollen ausgenutzt werden kann; darauf wird weiter unten noch eingegangen. Die Bilder 30 des für die visuelle Beurteilung bestimmten Bereichs VTI schliesslich enthalten in an sich bekannter Weise Motive mit kritischen Farbtönen und Farbzusammenstellungen, welche sich für die visuelle Beurteilung besonders gut eignen. Geeignete Motive sind dem Fachmann bekannt.

Anhand des Farbmessstreifens CMS werden für alle in der Praxis gängigen Vorlagentypen in an sich bekannter Weise körperliche Test-Vorlagen gebildet, indem die Bildinformation des Farbmessstreifens CMS von einer Master-Vorlage oder digital auf die einzelnen Vorlagenmaterialien aufbelichtet und diese dann in standardisierter Weise entwickelt werden. Die den Farbmessstreifen als Bildinformation tragenden Test-Vorlagen können im Fotolabor anhand eines Master-Farbmessstreifens selbst hergestellt oder z.B. auch von einem auf die Herstellung solcher Test-Vorlagen spezialisierten Fachbetrieb bezogen werden.

Gemäss einer besonderen Ausgestaltung des erfindungsgemässen Verfahrens wird bei der Erstellung der körperlichen Testvorlagen wenigstens der Testbildbereich CTI, vorzugsweise aber auch die beiden anderen Bereiche CTC und VTI dreimal auf jeden Vorlagentyp aufbelichtet, und zwar einmal mit Normal-Belichtung, einmal mit Unterbelichtung (zB. -2 Blenden) und einmal mit Überbelichtung (z.B. +2 Blenden). Dies erlaubt eine genauere Beurteilung der Farbqualität und insbesondere bei der vorstehend beschriebenen Kategorisierung der Vorlagentypen eine exaktere Zuordnung. (Es stehen jetzt pro Testvorlage 3x12 Farbwerte anstelle von nur 1x12 Farbwerten für den Vergleich zur Verfügung.) Wenn die Farbwerte der für die Kategorisierung bestimmten Farbmessfelder der einzelnen Testvorlagen ermittelt und abgespeichert werden, können sie für eine spätere Neu-Kategorisierung verwendet werden, ohne dass die Testvorlagen neu ausgemessen werden muss.

Für eine besondere Ausführungsform der Erfindung können auch unentwickelte, die Bildinformation des Farbmesstreifens also lediglich in latenter Form tragende Test-Vorlagen erforderlich sein; darauf wird weiter unten noch eingegangen.

Zur Erstellung eines Profils für eine spezifische Scanner-Vorlagentyp-Kombination wird, wie in Figur 4 schematisch dargestellt ist, eine Testvorlage des Referenzvorlagentyps V_{R} und eine Testvorlage des zu profilierenden Hauptvorlagentyps V_{H} bereitgestellt, welche beide jeweils (mindestens) die erwähnte Farbmesskarte CTC des Farbmessstreifens CMS als Bildinformation tragen. Von der Testvorlage des Referenzvorlagentyps V_{R} wird dann mittels der analogen Produktionslinie APL ein körperliches, analoges Referenz-Farbbild B_{R} erzeugt, welches die einzelnen Farbmessfelder der Farbmesskarte CTC als Bildinformation enthält. Dieses analoge Referenz-Farbbild B_{R} wird nun mittels eines Farbmessgeräts, z.B. des erwähnten spektralen Streifenlesegeräts SSR, ausgemessen, wobei zu jedem Farbmessfeld der Farbtestkarte der zugehörige Farbwert ermittelt wird. Die Gesamtheit dieser so ermittelten Farbwerte ist in Figur 4 durch ein digitales Referenz-Bild B_{Rd} symbolisiert. Von der Testvorlage des zu profilierenden Hauptvorlagentyps V_{H} wird mittels des zu profilierenden Scanners S ein digitales Farbbild B_{d}' erzeugt, aber nicht farbtransformiert. Die (rohen) Bilddaten dieses digitalen Farbbilds B_{d}' stellen in ihrer Gesamtheit ebenfalls wieder die Bildinformation der Farbmesskarte CTC dar. Die Farbwerte der einzelnen Farbmessfelder der Farbmesskarte aus diesem digitalen Farbbild B_{d}' und die gemessenen Farbwerte der entsprechenden Farbmessfelder der Farbmesskarte des digitalen Referenz-Farbbilds B_{Rd} werden nun der erwähnten Profilerstellungssoftware PSW zugeführt, und diese erzeugt daraus in an sich bekannter Weise ein (z.B. gemäss ICC) genormtes Profil P für die gegebene Vorlagentyp-Scanner-Kombination. In gleicher Weise werden für alle weiteren Vorlagentyp-Scanner-Kombinationen die weiteren Profile erzeugt. Die so erzeugten Profile P werden nach Scanner-Typ gruppiert in den den unterschiedlichen Scannern S zugeordneten, zu entsprechenden Kategorie-Tabellen KT gehörenden Profil-Tabellen PT abgelegt und stehen dann in der weiter oben beschriebenen Weise für die Farbtransformation T zur Verfügung.

Die Erstellung der Profile erfolgt praktischerweise anhand eines Testvorlagen-Batches TVB . Es ist dies eine körperliche Montage von Testvorlagen aller in der Praxis relevanten unterschiedlichen Hauptvorlagentypen ("Master"). Ein solcher Testvorlagen-Batch enthält pro (Haupt-)Vorlagentyp einen Messstreifen CMS gemäss Figur 3, vorzugsweise wie erwähnt je dreimal in unterschiedlichen Belichtungsstufen.

Gemäss einem weiteren wichtigen Aspekt der Erfindung werden unmittelbar nach der Erstellung und Abspeicherung aller erforderlichen Profile aus den noch abgespeichert vorliegenden rohen Bilddaten B_{d}' der einzelnen auf dem Batch TVB vorhandenen Testvorlagen unter Verwendung der zugeordneten, soeben erstellten Profile mittels der Farbtransformation T digitale Referenz-Test-Farbbilder B_{dRT} erzeugt und abgespeichert. Diese können, wie weiter unten noch erläutert, gemäss einem weiteren Aspekt der Erfindung zur automatischen Qualitätskontrolle herangezogen werden.

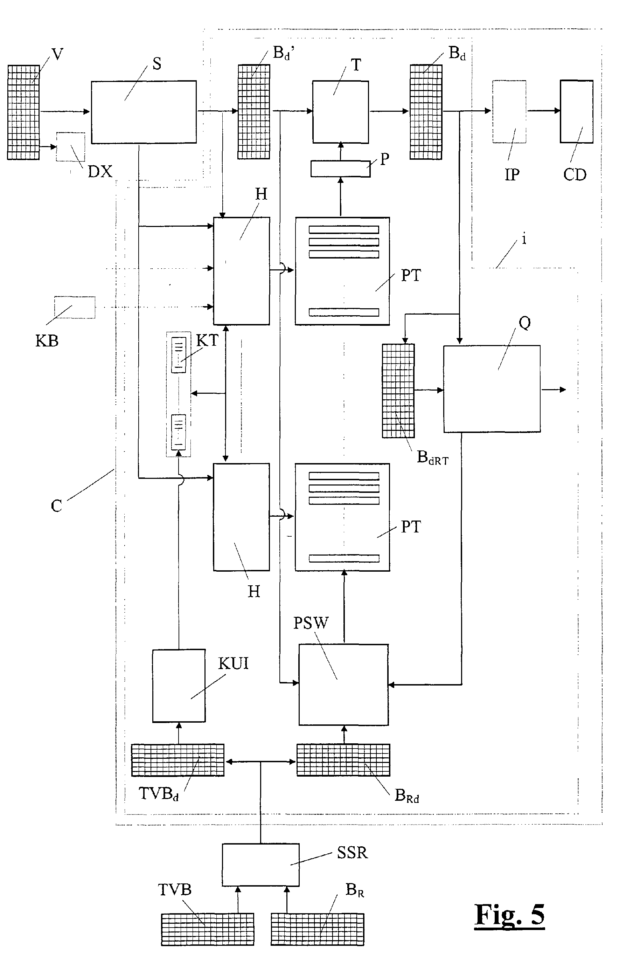

Die Figur 5 zeigt schematisch die wichtigsten Komponenten eines Ausführungsbeispiels der erfindungsgemässen Vorrichtung. Mit Ausnahme des Abtastgeräts bzw. Scanners S und des Streifenlesegeräts SSR sind alle Komponenten der Vorrichtung durch Funktionsmodule eines auf einem Rechner laufenden Software-Pakets realisiert. In Figur 5 sind daher der bequemeren Zuordnung halber für die einzelnen Komponenten der Vorrichtung dieselben Bezugszeichen wie für die entsprechenden Verfahrensschritte bzw. Funktionen des in den Figuren 2-4 dargestellten Verfahrens verwendet. Es versteht sich, dass anstelle eines einzelnen Rechners in der Praxis auch ein Rechnersystem oder Rechnerverbund vorgesehen sein kann und typischerweise auch ist. Wesentlich ist lediglich, dass die im folgenden beschriebenen, in der Hauptsache digitalen Abläufe und Funktionen in ihrer Gesamtheit irgendwie zentral oder dezentral implementiert sind.

Die dargestellte erfindungsgemässe Vorrichtung zur Herstellung digitaler Farbbilder umfasst als wesentlichste Komponenten das Abtastgerät bzw. Scanner S und einen Rechner oder Rechnerverbund C sowie das vorzugsweise als spektral arbeitendes Streifenlesegerät ausgebildete Farbmessgerät SSR. Zum Rechner C gehört eine übliche Tastatur KB sowie ein nicht dargestellter Monitor. Ferner ist ein DX-Code-Leser DX vorgesehen. Das Abtastgerät S, das Farbmessgerät SSR und der DX-Code-Leser DX sind in an sich bekannter Weise an den Rechner C angeschlossen und können in ebenfalls an sich bekannter Weise mit diesem kommunizieren und von diesem gesteuert werden. Soweit entspricht die erfindungsgemässe Vorrichtung dem Stand der Technik, so dass der Fachmann diesbezüglich keiner näheren Erläuterung bedarf. Die gegenüber dem Stand der Technik unterschiedlichen Teile der erfindungsgemässen Vorrichtung sind durch die strichlierte Linie i umrahmt.

Der Rechner C umfasst eine Reihe von spezifischen Eingangs-Handlern H, die je einem der im Fotolabor eingesetzten unterschiedlichen Typen von Scannern S zugeordnet sind. Die Eingangs-Handler H überwachen den ihnen zugeordneten Scanner S und erkennen, wenn ein Scanner aktiv ist und digitale Bilddaten von einer Vorlage V produziert. Die Eingangs-Handler H arbeiten mit den zuvor erzeugten und abgespeicherten Kategorien-Tabellen KT und den ebenfalls abgespeicherten Profil-Tabellen PT zusammen. Sie erkennen den Typ der gerade bearbeiteten Vorlage anhand der Begleit-Daten (z.B. eine sog. Capture-Datei), die typischerweise von für solche Zwecke eingesetzte Hochleistungs-Scanner zur Verfügung gestellt werden. Falls der eingesetzte Scanner-Typ keine solchen Begleit-Daten erzeugt, kann der Vorlagentyp auch mittels des DX-Code-Lesers DX ermittelt und dem Eingangs-Handler H mitgeteilt werden. Schliesslich ist z.B. für Diapositiv-Vorlagen auch noch eine manuelle Eingabe über die Tastatur KB möglich. In den Einstellungen der Eingangs-Handler H sind die zu verwendenden Kategorie-Tabellen KT und die dazugehörigen Profil-Tabellen PT für die spezifischen Prozess-Konstellation (Negativ kopieren, Diapositiv kopieren, ...; Amateurfotografie, Fachfotografie, ..., vgl. Beschreibung weiter vorne) definiert. Aufgrund des aktuellen Vorlagentyps wird dann der Hauptvorlagentyp der betreffenden Vorlagen-Kategorie bestimmt und aufgrund des Hauptvorlagentyps das zu verwendende Profil P aus der Profil-Tabelle PT dem Color Management Modul (Transformations-Modul) T zur Verfügung gestellt. Dieses transformiert die vom Scanner S erzeugten rohen Bilddaten B_{d}' unter Verwendung des vom Eingangs-Handler H ausgewählten Profils P und erzeugt daraus die Bilddaten des transformierten digitalen Farbbilds B_{d}. Das digitale Bild wird nun erforderlichenfalls noch in einer Bilddrehstufe IP in an sich üblicher und bekannter Weise gedreht und dann zur weiteren Verarbeitung passenden Ortes im Dateisystem des Rechners C gespeichert. Die gespeicherten bzw. fertig verarbeiteten digitalen Farbbilder können dann z.B. mittels einer Aufzeichnungssoftware CD in an sich üblicher Weise auf einem Datenträger, z.B. einer Compact Disk, aufgezeichnet werden. Selbstverständlich sind mit dem erfindungsgemäss transformierten digitalen Farbbild im Bedarfsfall auch alle zusätzlichen Bildbearbeitungsvorgänge möglich, die bei konventionell erzeugten digitalen Farbbildern üblicherweise nach der Digitalisierung angewandt werden.

Der Rechner oder Rechnerverbund C enthält auch ein an sich bekanntes Profilerstellungsmodul PSW, welches in der weiter vorne im Zusammenhang mit Fig. 4 beschriebenen Weise mit dem angeschlossenen automatischen Farbmessgerät SSR sowie mit dem bzw. den Scannern C zusammenarbeitet und die Profile P für jede Kombination von Scanner-Typ und Hauptvorlagentyp erzeugt und in der dem jeweiligen Scanner-Typ zugeordneten Profil-Tabelle PT ablegt. Die Profilerstellung erfolgt in der weiter vorne beschriebenen Weise anhand des alle Hauptvorlagentypen enthaltenden Testvorlagen-Batches TVB, und im Anschluss an die Profilerstellung werden auch die digitalen Referenz-Test-Farbbilder B_{dRT} erzeugt und geeigneten Ortes im Dateisystem des Rechners C abgespeichert.

Ferner ist noch ein Kategorisierungsmodul KUI vorgesehen, welches den Benutzer bei der Bildung der Kategorien-Tabellen und der Zuordnung der verschiedenen Vorlagentypen zu Vorlagenkategorien bildschirmgeführt interaktiv unterstützt. Es vergleicht dazu in der weiter vorne beschriebenen Weise die mittels des Streifenlesegeräts SSR oder sonstigen Farbmessgeräts von den Testvorlagen eingelesenen Farbwerte der Farbmessfelder derselben und erzeugt nach einer vom Benutzer ausgewählten Zuordnungsstrategie (z.B. max. Farbabweichung, Anzahl Kategorien) vollautomatisch die Kategorie-Tabellen KT und speichert diese ab. Die Gesamtheit der mittels des Streifenlesegeräts SSR gemessenen und für die weitere Verwendung abgespeicherten Farbwerte des Test-Vorlagen-Batches TVB ist in der Figur 5 symbolisch mit TVB_{d} bezeichnet.

Gemäss einem weiteren wichtigen Aspekt ist zusätzlich ein Qualitätsüberwachungsmodul Q vorgesehen. Dieses vergleicht aktuell produzierte digitale Test-Farbbilder B_{dT} mit den zuvor abgespeicherten Referenz-Test-Farbbildern B_{dRT} und signalisiert Abweichungen in einer bei Prozessüberwachungssystemen üblichen Form, z.B. auf dem an den Rechner C angeschlossenen Monitor. Vorzugsweise sind dabei zwei Grenzen vorgesehen. Bei Überschreitung einer ersten Abweichungsgrenze kann z.B. eine entsprechende Warnmeldung erzeugt werden, bei Überschreitung einer zweiten Abweichungsgrenze kann z.B. eine Neu-Profilierung ausgelöst oder der Produktionsprozess angehalten werden. Für die praktische Durchrührung der Qualitätsüberwachung wird von Zeit zu Zeit, beispielsweise 3-4 mal täglich, der Testvorlagen-Batch TVB in den Produktionsprozess eingespeist, und die von diesem Testvorlagen-Batch erzeugten digitalen Test-Farbbilder werden mit den entsprechenden Referenz-Test-Farbbildern B_{dRT} verglichen. Für den Vergleich wird vorzugsweise der Farbtestbild-Bereich des Farbmessstreifens mit den relativ wenigen (im Beispiel 12) Farbmessfeldern herangezogen. Als Vergleichskriterium kann z.B. die Summe oder der Mittelwert der Farbabweichungen der einzelnen Farbmessfelder dienen.

Durch die regelmässige Qualitätsüberwachung können insbesondere durch Veränderungen der eingesetzten Scanner S verursachte unerwünschte Veränderungen der Farbwiedergabequalität frühzeitig erkannt und entsprechende Korrkturmassnahmen insbesondere auch automatisch eingeleitet werden. Beispielsweise kann das Qualitätsüberwachungsmodul Q automatisch eine Neu-Berechnung einiger oder im Extremfall aller Profile P veranlassen. Da die Testvorlagen des Testvorlagen-Batchs auch die Farbtestkarten enthalten, liegen bei der Qualitätskontrolle automatisch immer alle erforderlichen Messwerte für die Neu-Berechnung der Profile vor.

Wenn bei der Herstellung der digitalen Farbbilder nicht von fertig entwickelten, sondern von unentwickelten Vorlagen ausgegangen wird, lässt sich die Qualitätsüberwachung gemäss einem weiteren Aspekt der Erfindung auch auf den nasschemischen Prozess (Film-Entwicklung FP) bei der Herstellung der Vorlagen V ausdehnen. In diesem Fall kommen die schon weiter vorne erwähnten unentwickelten Test-Vorlagen zum Einsatz. Wenn die Profile ebenfalls anhand latente Testbilder tragender, unentwickelter Test-Vorlagen erstellt werden, schliessen sie zusätzlich auch noch die Einflüsse der nasschemischen Behandlung des Vorlagenmaterials mit ein. Auf diese Weise kann die Farbqualität der digitalen Farbbilder auch (in Grenzen) unabhängig von der spezifischen nasschemischen Behandlung des Vorlagenmaterials gemacht werden.

Durch die Erfindung ist es erstmals praktisch machbar, Color Management in der Produktion von digitalen Farbbildern einzusetzen und dadurch zu einer konsistenten Farbwiedergabequalität unter allen Prozess-Konstellationen zu kommen..

## Patentansprüche

1. Verfahren zur Herstellung eines digitalen Farbbilds von einer insbesondere fotografischen Vorlage, wobei die Vorlage (V) mittels eines farbtauglichen Abtastgeräts (S) fotoelektrisch abgetastet und das digitale Farbbild (B_{d}) aus den dabei gewonnenen Abtastwerten gebildet und in einem vorgegebenen Datenformat abgespeichert oder auf ein Datenträgermedium aufgezeichnet wird, **dadurch gekennzeichnet, dass** das digitale Farbbild vor seiner Abspeicherung bzw. Aufzeichnung mittels einer Farbtransformation (T) so transformiert wird, dass eine farbmetrische Übereinstimmung zwischen dem digitalen Farbbild (B_{d}) und einem Referenz-Farbtestbild (B_{R}) erreicht wird.

2. Verfahren nach Anspruch 1, **dadurch gekennzeichnet, dass** die Farbtransformation (T) nach den Prinzipien des Color Management unter Verwendung eines spezifischen Profils (P) erfolgt, welches die typspezifischen farbmetrischen Eigenschaften der Vorlage (V) in Kombination mit der spezifischen Übertragungsfunktion des eingesetzten Abtastgeräts (S) beschreibt.

3. Verfahren nach Anspruch 2, **dadurch gekennzeichnet, dass** für eine Anzahl von Kombinationen von unterschiedlichen Vorlagentypen (V) und unterschiedlichen Abtastgeräten (S) je ein Profil (P) bereitgestellt wird, und dass die Farbtransformation (T) mit jenem Profil (P) durchgeführt wird, das zu dem aktuell eingesetzten Abtastgerät (S) und zu dem Typ der aktuellen Vorlage (V) gehört.

4. Verfahren nach Anspruch 3, **dadurch gekennzeichnet, dass** unterschiedliche Vorlagentypen nach Ähnlichkeit der farbmetrischen Eigenschaften je einer von einer Anzahl von Vorlagenkategorien zugeordnet werden, dass für jede Vorlagenkategorie ein Vorlagentyp als Hauptvorlagentyp (V_{H}) festgelegt wird, dass für jede Kombination von Hauptvorlagentyp (V_{H}) und unterschiedlichem Abtastgerät (S) ein eigenes Profil (P) bereitgestellt wird, und dass die Farbtransformation (T) mit jenem Profil (P) durchgeführt wird, das zu dem aktuell eingesetzten Abtastgerät (S) und zu dem Hauptvorlagentyp (V_{H}) derjenigen Vorlagenkategorie gehört, zu welcher die aktuelle fotografische Vorlage (V) gehört.

5. Verfahren nach Anspruch 4, **dadurch gekennzeichnet, dass** für unterschiedliche Qualitätsanforderungen unterschiedliche Zuordnungen der Vorlagentypen zu Vorlagenkategorien gebildet und für die Auswahl des jeweiligen Profils (P) herangezogen werden.

6. Verfahren nach Anspruch 3 oder 4, **dadurch gekennzeichnet, dass** für die Zuordnung der unterschiedlichen Vorlagentypen zu Vorlagenkategorien ein mehrere Farbmessfelder aufweisendes Testbild tragende Testvorlagen der einzelnen Vorlagentypen bereitgestellt werden, dass die Farbwerte der Farbmessfelder gemessen werden, dass die Farbmesswerte der Testvorlagen verglichen werden, und dass die Zuordnung der Vorlagentypen aufgrund des Vergleichs der Farbmesswerte erfolgt.

7. Verfahren nach einem der vorangehenden Ansprüche, **dadurch gekennzeichnet, dass** ein Vorlagentyp als übergeordneter Referenzvorlagentyp (V_{R}) festgelegt wird, dass von einer eine Farbtestkarte (CTC) enthaltenden Vorlage dieses Referenzvorlagentyps (V_{R}) eine körperliches analoge Farbtestkarte als Referenz-Farbtestbild (B_{R}) hergestellt wird, und dass dieses Referenz-Farbtestbild (B_{R}) zur Erstellung der Profile (P) mit herangezogen wird.

8. Verfahren nach einem der Ansprüche 2-5, **dadurch gekennzeichnet, dass** von Zeit zu Zeit mit Hilfe von Testvorlagen eine Qualitätskontrolle (Q) durchgeführt wird, wobei von Testvorlagen erzeugte digitale Test-Farbbilder mit entsprechenden Referenz-Test-Farbbildern farbmetrisch verglichen werden und aus den dabei ermittelten - Farbunterschieden ein Qualitätsmass gebildet wird, und dass die Profile (P) neu erstellt werden, wenn das Qualitätsmass einen Grenzwert überschreitet.

9. Verfahren nach einem der vorangehenden Ansprüche, **dadurch gekennzeichnet, dass** die Vorlage (V) belichtetes fotografisches Vorlagenmaterial ist, welches vor der Abtastung nasschemisch behandelt wird, und dass die nasschemische Behandlung (FP) des Vorlagenmaterials in die Bildung der Profile (P) mit einbezogen wird.

10. Vorrichtung zur Herstellung eines digitalen Farbbilds von einer insbesondere fotografischen Vorlage, mit einem farbtauglichen Abtastgeräts (S) zur fotoelektrischen Abtastung der Vorlage (V) und zur Bildung des digitalen Farbbilds (B_{d}) aus den dabei gewonnenen Abtastwerten in einem vorgegebenen Datenformat, und mit einem mit dem Abtastgerät (S) zusammenarbeitenden Rechner (C), der das digitale Farbbild abspeichert oder auf ein Datenträgermedium aufzeichnet, **dadurch gekennzeichnet, dass** der Rechner (C) das digitale Farbbild vor seiner Abspeicherung bzw. Aufzeichnung einer Farbtransformation (T) unterwirft, welche den durch die typspezifischen farbmetrischen Eigenschaften der Vorlage (V) in Kombination mit der spezifischen Übertragungsfunktion des eingesetzten Abtastgeräts (S) gegebenen Farbraum so transformiert, dass eine farbmetrische Übereinstimmung zwischen dem digitalen Farbbild (B_{d}) und einem Referenz-Farbtestbild (B_{R}) erreicht wird.

11. Vorrichtung nach Anspruch 10, **dadurch gekennzeichnet, dass** der Rechner (C) die Farbtransformation (T) nach den Prinzipien des Color Management unter Verwendung eines spezifischen Profils (P) durchführt, welches die typspezifischen farbmetrischen Eigenschaften der Vorlage (V) in Kombination mit der spezifischen Übertragungsfunktion des eingesetzten Abtastgeräts (S) beschreibt.

12. Vorrichtung nach Anspruch 11, **dadurch gekennzeichnet, dass** im Rechner (C) für eine Anzahl von Kombinationen von unterschiedlichen Vorlagentypen (V) und unterschiedlichen Abtastgeräten (S) je ein Profil (P) abgespeichert ist, dass der Rechner (C) Mittel (H) aufweist, um das aktuell eingesetzte Abtastgerät (S) und den Typ der aktuellen Vorlage (V) anhand von ihm zugeführten diesbezüglichen Informationen zu erkennen, und dass der Rechner (C) die Farbtransformation (T) mit jenem Profil (P) durchführt, das zu dem aktuell eingesetzten Abtastgerät (S) und zu dem Typ der aktuellen Vorlage (V) gehört.

13. Vorrichtung nach Anspruch 12, **dadurch gekennzeichnet, dass** der Rechner (C) Mittel (KUI) aufweist, um unterschiedliche Vorlagentypen nach Ähnlichkeit der spektralen Eigenschaften je einer von einer Anzahl von Vorlagenkategorien zuzuordnen und für jede Vorlagenkategorie einen Vorlagentyp als Hauptvorlagentyp (V_{H}) festzulegen, dass im Rechner (C) für jede Kombination von Hauptvorlagentyp (V_{H}) und unterschiedlichem Abtastgerät (S) ein Profil (P) abgespeichert ist, und dass der Rechner (C) die Farbtransformation mit jenem Profil (P) durchführt, das zu dem aktuell eingesetzten Abtastgerät (S) und zu dem Hauptvorlagentyp (V_{H}) derjenigen Vorlagenkategorie gehört, zu welcher die aktuelle fotografische Vorlage (V) gehört.

14. Vorrichtung nach einem der Ansprüche 10-13, **dadurch gekennzeichnet, dass** der Rechner (C) eine Profilerstellungssoftware (PSW) umfasst, welche anhand von ihr zugeführten Bilddaten eines digitalen Test-Farbbilds und eines Referenz-Farbbilds automatisch ein Profil (P) erzeugen kann.

15. Vorrichtung nach einem der Ansprüche 10-14, **dadurch gekennzeichnet, dass** der Rechner (C) eine Qualitätskontrollsoftware (Q) umfasst.

16. Vorrichtung nach Anspruch 15, **dadurch gekennzeichnet, dass** die Qualitätskontrollsoftware (Q) durch Vergleich von digitalen Test-Farbbildern mit entsprechenden digitalen Referenz-Test-Farbbildern ein Qualitätsmass bildet, und dass sie eine Neu-Berechnung der Profile (P) veranlasst, wenn das Qualitätsmass einen Grenzwert überschreitet.

17. Farbmessstreifen zur Durchführung des Verfahrens gemäss einem der Ansprüche 1-9, **dadurch gekennzeichnet, dass** er drei Bereiche umfasst, von denen einer ein Farbtestbild (CTI) mit einer verhältnismässig geringen Anzahl von Farbmessfeldern (10) darstellt, ein zweiter eine Farbtestkarte (CTC) mit einer verhältnismässig grossen Anzahl von Farbmessfeldern (20) darstellt und ein dritter ein visuelles Testbild (VTI) mit wenigstens einem für die visuelle Farbbeurteilung geeigneten Bildmotiv (30) darstellt.

18. Farbmessstreifen nach Anspruch 17, **dadurch gekennzeichnet, dass** der das Farbtestbild (CTI) darstellende Bereich zwölf Farbmessfelder in den additiven und subtraktiven Grundfarben, weiss, schwarz und vier unterschiedlichen Grautönen aufweist.
